(19) Europäisches Patentamt
European Patent Office
Office européen des brevets

(11) **EP 4 765 623 A1**

(12) **EUROPEAN PATENT APPLICATION**

(43) Date of publication:
24.06.2026 Bulletin 2026/26

(21) Application number: 24220765.2

(22) Date of filing: 17.12.2024

(51) International Patent Classification (IPC):
*H02P 21/14* (2016.01)    *H02P 21/16* (2016.01)
*H02P 23/14* (2006.01)

(52) Cooperative Patent Classification (CPC):
H02P 21/16; H02P 21/141; H02P 23/14

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Polestar Performance AB**
**405 31 Gothenburg (SE)**

(72) Inventors:
• HU, Yifei
417 62 Göteborg (SE)
• HOFWIMMER, Rasmus
413 16 Göteborg (SE)

(74) Representative: **Zacco Sweden AB**
**P.O. Box 5581**
**Löjtnantsgatan 21**
**114 85 Stockholm (SE)**

(54) **A METHOD FOR COMPENSATING A TOTAL FORWARD RESISTANCE**

(57)    The present disclosure relates to a method (100) for compensating a total forward resistance occurring across conducting components of an electric machine, the method comprising determining (101), in a flux controller, an actual stator flux. Further, the method (100) comprises determining (102) a maximum actual phase voltage magnitude applied on the stator windings, based on the actual stator flux. Further, the method (100) comprises providing (103) a compensation parameter that satisfy a condition in which said maximum actual phase voltage magnitude is equal to a reference voltage. Further, the method (100) comprises the step of compensating (104) the total forward resistance by using said parameter.

Figure 1

**Description**

TECHNICAL FIELD

The present disclosure relates to a method for compensating a total forward resistance occurring across conducting components of an electric machine. Further, the disclosure relates to an electric drive system, a vehicle and a computer-readable storage medium.

BACKGROUND

Forward voltage drop normally indicates the voltage drop across a conducting power module (MOSFET, IGBT, GaN, or diode) device and connection between inverter and electric machine due to resistance. Generally, the voltage drop in a circuit is directly proportional to the resistance and the amount of current flowing through the resistance.

However, in an electric drive system, the total forward voltage drop is not only the forward voltage drop across the conducting power module, but also the forward voltage drop across the cables or the bus bars connecting the electric machine and the inverter as well as other mechanical connections resistances.

Thus, in an electric drive system it is challenging to identify the total forward voltage drop and consequently also the total forward resistance. As it is challenging to identify the total forward voltage drop resistance, It is also challenging to compensate the total forward voltage drop resistance.

An advantage of being able to compensate the total forward drop resistance is that it would allow for benefits in terms of efficiency of controlling the electric machine accurately as the voltages applied on the machine windings will be exactly or substantially the same as the reference voltage. Additionally, compared to under-compensating, compensating the total forward resistance correctly enables achieving a maximum voltage utilization at high speed, resulting in achieving a larger torque delivery at high speed. Thus it would increase the overall efficiency of an electric drive system comprising an electric machine. Compared to overcompensating, compensating the total forward resistance correctly enhances the control stability of the electric machine

Currently, there are no methods in the present art that compensate the total forward resistance across conducting components of an electric machine (e.g. components connecting an electric machine to inverter and power module) with enough accuracy and efficiency.

Based on the aforementioned, there are needs for methods in the present art that are able to compensate the total forward resistance across conducting components of an electric machine. Specifically, there is a need for methods in the present art that are able to compensate the total forward resistance across conducting components of an electric machine with high accuracy and/or efficiency.

Therefore, it would be desirable to provide a method of controlling an electric machine by compensating a total forward resistance occurring across conducting components of an electric machine that is improved in accuracy and/or efficiency compared to the methods of the present art.

SUMMARY

It is therefore an object of the present disclosure to alleviate at least some of the mentioned drawbacks to provide a method for compensating a total forward resistance occurring across conducting components of an electric machine. Further, the present disclosure provides an electric drive system (EDS) and a computer-readable storage medium comprising instructions for performing such a method. Further, the disclosure provides a vehicle.

The present disclosure is at least partly based on the insight that the method herein is more efficient and/or accurate compared to conventional methods of controlling an electric machine, as herein a compensation parameter is provided which satisfy a condition in which an actual phase voltage is equal to a reference voltage.

The present disclosure relates to a method for compensating a total forward resistance occurring across conducting components of an electric machine. The method may be a computer-implemented method. The method comprises the step of determining, in a flux controller, an actual stator flux ($\psi_{act}$). The actual stator flux being an amount of magnetic flux of a stator of said electric machine. Further, the method comprises the step of determining a maximum actual phase voltage magnitude ($U_{act}$) applied on the stator windings based on the actual stator flux. Moreover, the method comprises the step of providing a compensation parameter that satisfy a condition in which said maximum actual phase voltage magnitude ($U_{act}$) is equal to a reference voltage ($U_{ref}$). Furthermore, the method comprises the step of compensating the total forward resistance by using said compensation parameter.

Advantageously, the method conveniently, in an efficient manner compensate the total forward voltage accurately without need of excess inconvenient work on for example calibration, hardware test, and data acquisition nor need of any external measurement. Therefore, it enables cost reduction, improved performance at high speed and freedom of changing hardware.

The phrase "compensating the forward resistance" may be interchanged with "compensating total forward voltage drop resistance" or "total forward voltage drop" across conducting components of the electric machine.

Further, the term electric machine within the context of the disclosure may also encompass an inverter. I.e. the phrase "a method for compensating a total forward resistance occurring across conducting components of an electric machine" may be interchanged with "a method for compensating a total forward resistance occurring across conducting components of an electric machine and an inverter".

The method steps of determining and providing may be performed during a field-weakening operation of said electric machine. Accordingly, during a state of the electric machine (and/or the electric drive system that the electric machine is part of) in which voltage utilization is maximized. I.e. allowing for the reference voltage to be equal to, or substantially equal to a maximum available voltage that is obtainable from the battery pack. In other words, maximum available DC link voltage.

Thus, in some aspects of the method, the method may comprise the step of initiating/performing a field weakening operation. Accordingly, the steps of determining and providing may be performed after said field weakening operation is initiated. The field weakening operation may be initiated by applying a maximized torque to said electric machine. Subsequently, once the electric machine reaches a pre-determined speed (e.g. base speed) a magnetic flux in the electric machine may be reduced to enable the electric machine to operate at a higher speed (i.e. higher than said base speed) at a reduced torque. During said field weakening operation voltage utilization from the battery pack may be maximized.

Performing the method steps of determining and providing during the field weakening operation allow for a more accurate compensation parameter to be provided.

The step of determining the actual stator flux may comprise receiving, in said flux controller, the reference voltage and a voltage setpoint as inputs, and providing the actual stator flux as an output from said flux controller. The flux controller may be implemented in a feedback-based environment/system such that the voltage setpoint is received from a module (such as a current controller) as input together with the reference voltage into the flux controller. Based on the input, the flux controller may output the actual stator flux which is an amount of magnetic flux of a stator of said electric machine.

The compensation parameter may be a total forward resistance compensation parameter ($R_{fTotComp}$). $R_{fTotComp}$ may also be referred to as the resistance compensation parameter. Accordingly, the compensation parameter may be a resistance compensation parameter equivalent/corresponding to the total forward resistance i.e. total forward voltage drop. Further, prior to, or during the step of providing, the method comprises receiving said reference voltage and said maximum actual phase voltage magnitude (may also be referred to as actual maximum phase voltage magnitude/level/value). The maximum actual phase voltage magnitude being based on electric machine speed and said actual stator flux during an actual operation of the electric machine, e.g. a field weakening operation. Accordingly, the step of providing the compensation parameter may be performed by using said received reference voltage and said maximum actual phase voltage magnitude.

The electric machine speed may be obtained directly from one or more sensor devices configured to monitor the electric machine speed.

The step of compensating the total forward resistance may comprise calculating, based on the resistance compensation parameter, a time compensation parameter ($T_{fTotComp}$). Further, the step of compensating may comprise adding the time compensation parameter to a modulator output, forming a final output, wherein the total forward voltage is compensated for said final output.

The final output may be operable to enable a power module (e.g. a power module of an inverter) to control at least one of a plurality of switches which are configured to enable or disable flow of current to the electric machine, depending on states of the switches (i.e. open or closed states).

For example, the final output may be indicative of a time-period that at least one switch associated with a corresponding phase will be opened and/or closed, or any other switching strategy. Accordingly, for a three-phase electric machine, there may be at least six switches, two associated to a corresponding one of three phases.

In some aspects, the final output may be indicative of a time-period in which a switch open or closed to determine the voltage on the electric machine windings. The switch may be a transistor switch. Accordingly, the power module may comprise six transistors, arranged in pairs, with each pair configured for controlling one phase of the electric machine. Hence, the final output may be indicative of the time-period that at least one switch associated to each corresponding phase of the electric machine will be in a specific state (e.g. a time-period/duration in which one switch of each pair is to be closed to determine the voltage on the electric machine windings).

Thus, in some aspects, the final output may be a time-period in which an upper/first switch of each transistor pair is closed. An actual control of the switches may be performed by a gate driver.

The modulator output may be an output from a pulse width modulator unit (PWM). The PWM unit may use a voltage setpoint as an input value to set e.g. time-period/on-time and/or duty cycle for each phase so to control the electrical machine. Accordingly, the final output may be a compensating time to said duty cycle (e.g. compensating duty cycle) or compensation on-time to said on-time.

The time compensation parameter $t_{fTotComp}$ may be based on the expression:

$$\frac{R_{fTotComp} \cdot I_{ph}}{U_{dc}} \cdot T_{sw}$$

wherein $T_{sw}$ is a switching period. The switching period may be a switching period of an inverter, a conducting power module (e.g. components thereof), $I_{ph}$ is a phase current through the components of the conducting power module, either an actual/measured phase current or a reference phase current. $R_{fTotComp}$ is said resistance compensation parameter. Accordingly, the time compensation parameter may be derived directly by equation:

$$t_{fTotComp} = \frac{R_{fTotComp} \cdot I_{ph}}{U_{dc}} \cdot T_{sw}$$

Accordingly, $I_{ph}$ may be the phase current through e.g. diodes, transistors and the like of a conducting power module of e.g. an inverter of the electric machine. $R_{fTotComp}$ may be a pre-determined value that is calculated offline so to be fetched from a memory unit.

Advantageously, the time compensating parameter may be obtained by an expression which may be utilized in a power and data efficient manner.

The reference voltage ($U_{ref,}$) may be based on, or correspond to a DC link voltage.

In some aspects the reference voltage, $U_{ref,}$ may be based on the following expression:
$\frac{U_{dc}}{\sqrt{3}} *$ factor

Factor may be a pre-determined factor. The pre-determined factor may vary based on non-linearity values and/or modulation methods. In some aspects, the reference voltage, $U_{ref,}$ may be directly derived from equation: $U_{ref} = \frac{U_{dc}}{\sqrt{3}} *$ factor . The factor may be any suitable factor, e.g. above or below 1.

The step of providing the compensation parameter may be performed according to at least a first or a second aspect.

In a first aspect, the step of providing the resistance compensation parameter is performed by calibrating the resistance compensation parameter until said maximum actual phase voltage magnitude ($U_{act}$) is equal to said reference voltage ($U_{ref,}$). The calibration may be performed manually e.g. by a user performing the calibration offline.

In other aspects, the calibration may be performed in a controller by inputting into the controller each of the reference voltage and the maximum actual phase voltage magnitude in various steady states of the electric machine, and to outputting, from the controller, a total forward resistance compensation parameter or a signal/-value representative of the total forward resistance compensation.

A resistance compensation parameter as the result of calibration may be used in common and iteratively e.g. several times during one or more vehicle drive cycles even after a field-weakening operation. Nonetheless, the compensation parameter is preferably determined/provided during said field-weakening operation. In other words, after obtaining the compensation parameter, the compensation parameter may be used in all drive cycles and drive conditions (not only field weakening) of a vehicle.

Accordingly, the resistance compensation parameter may be a fixed compensation parameter so to enable an efficient compensation of the total forward resistance.

The present disclosure further relates to an electric drive system, the electric drive system being configured to perform the method according to any aspect herein. The electric drive system may comprise an electric machine and an inverter.

Further, the present disclosure relates to a computer-readable storage medium storing one or more programs configured to be executed by one or more processors of an electric drive system, the one or more programs comprising instructions for performing the method according to any aspect herein.

Moreover, the present disclosure relates to a vehicle comprising the electric drive system according to any aspect herein.

BRIEF DESCRIPTION OF THE DRAWINGS

These and other features and advantages of the present disclosure will now be further clarified and described in more detail, with reference to the appended drawings;

Figure 1    illustrates schematically an electric drive system in accordance with an aspect of the present disclosure;

Figure 2    illustrates schematically an electric drive system in accordance with another aspect of the present disclosure;

Figure 3    illustrates schematically an electronic control unit in accordance with some aspects of the present disclosure;

Figure 4    illustrates schematically circuitry for controlling an inverter in accordance with some aspects of the present disclosure;

Figure 5    illustrates a method in the form of a flowchart in accordance with some aspects of the present disclosure; and

Figure 6    illustrates a vehicle comprising the electric drive system in accordance any aspect of the present disclosure.

DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic.

Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "compensation parameter" may be interchanged with "compensation variable" and may refer to a value stored in a memory unit or a signal carrying information that represents the value (the signal may be outputted from e.g. a resistance calibration controller).

The term "electric machine" may refer to an electric motor. The electric motor may be a permanent magnet synchronous motor (PMSM) or an electrically excited synchronous motor (EESM) or any other suitable type of electric motor. The electric machine may comprise a stator and a rotor. The stator may be a three-phase stator having windings in three distinct phases (e.g. referred as A, B and C) configured to create a rotating magnetic field when a three-phase AC current is applied. This rotating magnetic field may interact with the rotor to produce torque.

The term "maximum actual phase voltage magnitude" may refer to a peak value of a sinusoidal AC voltage applied to each phase winding or the peak value of the fundamental component of a non-sinusoidal AC voltage, e.g., when operating in non-linear region. The maximum actual phase voltage magnitude may be indicative of a magnetic field strength generated in the stator, however this also depends on electric machine speed. In other words, the maximum actual phase voltage magnitude may be the highest voltage per phase that is able to be outputted by the inverter.

The term "total forward resistance" may refer to a sum of resistance across conducting components of an electric machine and associated components (e.g. inverter) causing voltage drops when convert power to/from the electric machine in the electrical circuits. "Conducting components of an electric machine" may refer to conducting power modules (MOSFET, IGBT, GaN or diode), devices, cables or bus bars or any other mechanical connections connecting the inverter and the electric machine. In other words, the term may refer to resistance of components connecting the inverter and the electric machine. Accordingly, excluding components within the electric machine (such as windings). This resistance impacts the overall efficiency of the electrical system by generating heat within the components and impacts the torque availability at high speed / in field weakening by reducing the available voltage. Specifically, the term "total forward resistance" may refer to a sum of power module internal resistance and all other resistance that comes from the connection between inverter and electric machine.

The term "field weakening operation" may refer to a method used to increase a speed of an electric machine beyond a rated (base) speed. Field weakening may involve increasing the speed range of an electric machine by weakening the magnetic field of the electric machine over a speed range. Accordingly, by reducing magnetic field strength in the stator the torque decreases, enabling the motor to rotate at higher speeds. The term "field weakening operation" may be interchanged with "field weakening zone" or field weakening state". In other words, the term "field weakening operation" may refer to a state of the electric machine in which the magnetic field strength of the stator has been decreased while a speed of the electric machine is increased beyond a rated/base speed of the electric machine. In some aspects, to achieve said field weakening state, a maximum actual phase voltage magnitude is kept at a substantially maximum (or rated) value.

The term "flux controller" may be interchanged with "field-weakening controller".

The term "d-axis" and "q-axis" or "d-q values" used in the present disclosure may generally refer to the direct axis and the quadrature axis and are terms commonly used in motor control techniques, such as field-oriented control (FOC).

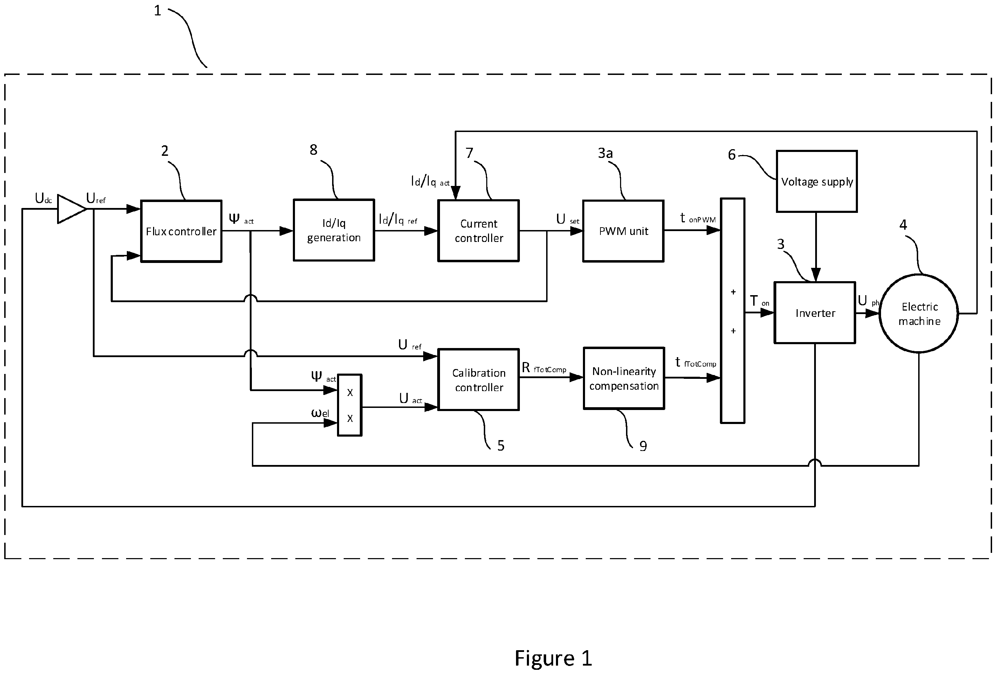

Figure 1 illustrates schematically an electric drive system 1 in accordance with some aspects of the present disclosure. The electric drive system 1 comprising a flux controller 2, an inverter 3, a current controller 7, an electric machine 4 and a calibration controller 5. Briefly described, the electric drive system 1 of Figure 1 may operate based on a principle in which:

- the flux controller 2 output an actual stator flux ($\psi_{act}$);
- the current controller 7 receive a reference current based on said actual stator flux and outputs a voltage setpoint;
- the inverter 3 controls the electric machine 4 based on said voltage setpoint with compensating for total forward resistance.

Details of each component in the electric drive system 1 and functions thereof will be further described in the following.

The electric drive system 1 may be configured to compensate a total forward resistance occurring across conducting components of the electric machine 4. In some aspects, the electric drive system 1 may be configured to compensate a total forward resistance occurring across conducting components of the electric machine 4 and/or the inverter 3.

As described previously, the electric drive system 1 may be configured to determine, in the flux controller 2, an actual stator flux ($\psi_{act}$). The actual stator flux being an amount of magnetic flux of a stator of said electric machine 4. Further, the electric drive system 1 may be configured to determine, in said flux controller 2 or another suitable module, a maximum actual phase voltage magnitude applied on the stator windings ($U_{act}$) based on the actual stator flux. Furthermore, the electric drive system 1 may provide a compensation parameter that satisfy a condition in which said maximum actual phase voltage magnitude is equal to a reference voltage. As illustrated in Figure 1, the compensation parameter may be provided by a calibration controller 5 which automatically calibrates and determines the compensation parameter so to satisfy said condition. Accordingly, the calibration controller 5 may output a signal or a value representing said compensation parameter, resulted from the calibration, to be used by the electric drive system 1 to compensate the total forward resistance. The calibration controller 5 may, when calibrating, detect when said condition is satisfied and output the compensation parameter accordingly as a compensation signal or value.

Figure 1 further illustrates that the electric drive system 1 may comprise a voltage supply unit 6 which is operable to connect a DC power source (e.g. a battery pack of an electric vehicle) to be able to transfer energy to/from the electric machine.

Figure 1 further illustrates that the step of determining the actual stator flux ($\psi_{act}$) may comprise receiving, in said flux controller 2, the reference voltage ($U_{ref}$) and a voltage setpoint ($U_{set}$) as input and providing the actual stator flux ($\psi_{act}$) as output based on the reference voltage and voltage setpoint.

Further, Figure 1 illustrates that the compensation parameter may be a total forward (equivalent) resistance compensation parameter ($R_{fTotComp}$) which in Figure 1 is calibrated by the calibration controller 5 and outputted from the calibration controller 5. However, prior to, or during the step of providing the compensation parameter, the electric drive system 1 may, as illustrated in Figure 1 receive, within the calibration controller, said reference voltage and said maximum actual phase voltage magnitude ($U_{ref}$, $U_{act}$). Accordingly, the step of providing may be performed by using said received reference voltage and said maximum actual phase voltage magnitude i.e. by equalizing the reference voltage and the maximum actual phase voltage magnitude. The reference voltage may be based on a DC link voltage, which, if the electric drive system is operating during a field-weakening operation, preferably is a maximum available voltage from the DC link voltage. The DC link voltage may be obtained from the inverter 3.

Figure 1 further illustrates that the maximum actual phase voltage magnitude may be derived from electric machine speed ($\omega_{el}$) and said actual stator flux ($\Psi_{act}$) within a module external to the calibration controller 5. Alternatively, not limited to the figure, said derivation may be done in the calibration controller 5. The electric machine speed may be received from one or more sensor devices of the electric drive system 1, e.g. a resolver and may be an instantaneous electric machine speed. Further, the actual stator flux may, as disclosed in the aforementioned, be an output by the flux controller 2 based on a voltage set point and a reference voltage.

The flux controller 2 may operate according to a feedback-based control strategy. Accordingly, the flux controller may be a proportional-integral (PI) controller, a proportional-integral derivative (PID) controller, or any other suitable type a feedback-based controller with reference voltage ($U_{ref}$) and voltage setpoint ($U_{set}$) as inputs and actual stator flux $\psi_{act}$ as an output. As one could intentionally increase the available stator flux so that an available stator flux is larger than the real available flux from the system 1, then the flux controller 2 may be forced to automatically adjust the system 1 to find a working point (steady state) which is outputted from the flux controller. Thus, at a field-weakening operation the actual stator flux may reflect the actual point where the electric machine 4 is running. So, the maximum actual phase voltage magnitude applied on the electric machine windings may calculated as:

$$U_{act}=\psi_{act}/\omega_{el}$$

where $\omega_{el}$ is the electrical angular speed of the rotor of the electric machine 4 in rad/s (radians per second).

Figure 1 further illustrates a current controller 7 which may be configured to receive a reference current, which is based on the actual stator flux ($\psi_{act}$) and a torque request. Further, the current controller may be configured to receive an actual current measured in the windings of said stator of said electric machine 4 so to output said voltage setpoint based on the reference current and the actual current. The reference current and actual current may be received in d-q values or in A, B, C phase values. The current controller 7 may be operating according to a feedback-based control strategy. Accordingly, the current controller 7 may be a proportional-integral (PI) controller, a proportional-integral derivative (PID) controller, or any other suitable type a feedback-based controller.

As illustrated in Figure 1 the electric drive system 1 may comprise a $I_d/I_q$ generation module 8 configured output the reference current in the form of d-q values e.g. via Clarke/Park transformation. The $I_d/I_q$ generation module 8 may be a maximum torque per voltage (MTPV) or maximum torque per ampere (MTPA) generation module. Accordingly, the reference current may be in the form of pairs of reference current values $I_{d\_ref}$ and $I_{q\_ref}$. Further, the current controller 7 may also receive, from the electric machine 4, an actual/measured current, also in d-q values, $I_{d\_act}$ and $I_{q\_act}$ to output said voltage setpoint based on the reference current and the actual current.

The compensation of the total forward resistance may be performed by calculating, based on the resistance compensation parameter, $R_{fTotComp}$, a time compensation parameter, $t_{fTotComp}$, which compensates a modulator output, forming a final output ($T_{on}$). Accordingly, by compensating the modulator output with the final output, the total forward voltage is compensated.

In one example, the time compensation parameter may be calculated based on the following expression:

$$t_{fTotComp} = \frac{R_{fTotComp} \cdot I_{ph}}{U_{dc}} \cdot T_{sw}$$

$U_{dc}$ is a DC link voltage (which may be obtained from the inverter 3), $I_{ph}$ is a phase current through the inverter 3 and $T_{sw}$ is a "switching time" or "switching period" and may refer to a time duration associated with the switching of power electronics devices, such as transistors (e.g., MOSFETs, IGBTs) used in the inverter 3. In other words, the rate at which power electronic switches (e.g. transistors etc.) in an inverter turn on and off.

Figure 1 illustrates that the modulator output may be outputted by a power module, such as a pulse width modulator unit 3a, the pulse width modulator unit (PWM) 3a, using the voltage setpoint as a PWM input.

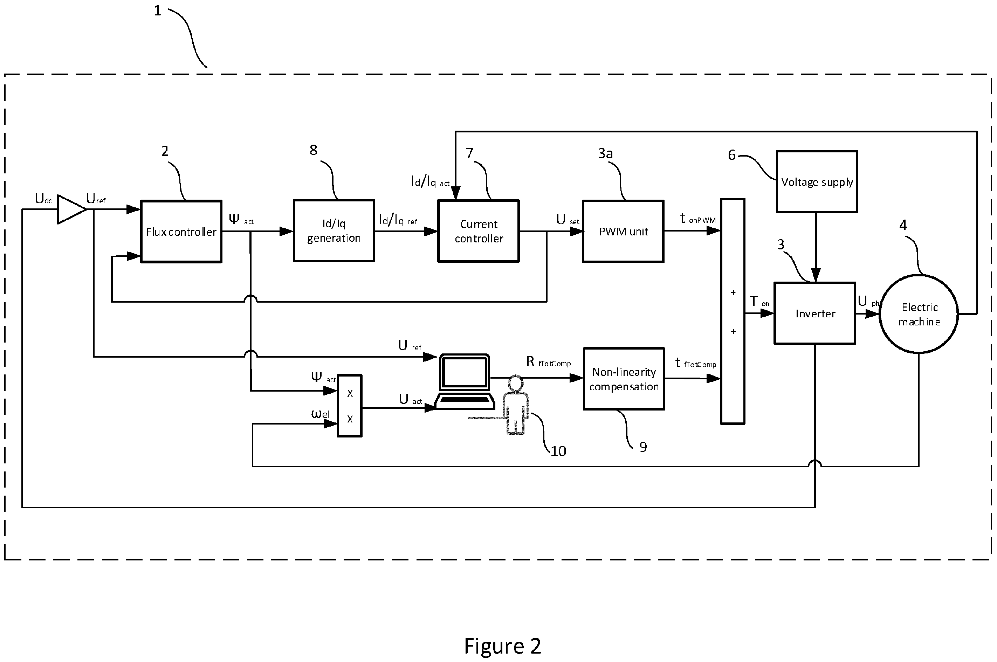

Figure 2 illustrates schematically an alternative electric drive system 1 in which the compensation parameter is calibrated manually by e.g. a user utilizing an electronic device 10 (e.g. a computer) and input to the electric drive system 1. Hence, in the electric drive system 1 of Figure 1 or Figure 2, the compensation parameter may be calibrated offline and then inputted to the electric drive system 1 for usage.

Further, referring to Figures 1 and 2. The inverter 3 of the electric drive system 1 may comprise a gate driver and power module (not shown) configured to, based on the final output ($T_{on}$), control switches to generate corresponding phase voltages ($U_{ph}$) for each phase of the electric motor 4.

As illustrated in Figures 1 and 2, the electric drive system 1 may comprise a non-linearity compensation module 9 configured to compensate non-linearities. The non-linearities may be compensated by providing the compensation parameter. Additionally or alternatively, the module 9 is configured to calculate $R_{fTotComp}$ to $T_{fTotComp}$. Referring to Figures 1 and 2, it should be noted that the electric machine 4, inverter 3 and the voltage supply 6 may be hardware components while other modules depicted in Figures 1 and 2 may be software modules/components

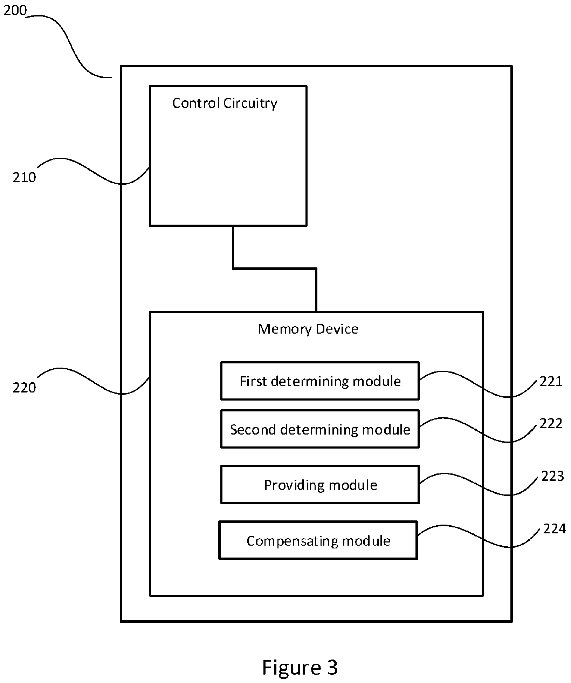

Figure 3 illustrates schematically an electronic control unit 200 of the electric drive system 1 which may be implemented in each one of the software modules/components and/or controllers illustrated in Figure 1 and Figure 2. In other aspects, the modules and/or controllers may comprise a common electronic control unit 200. The electronic control unit 200 may comprise control circuitry 210 and one or more memory devices 220. The control circuitry 210 may comprise, for example, one or more central processing units (CPUs), graphics processing units (GPUs) dedicated to performing calculations, and/or other processing devices. The control circuitry 210 may also comprise input/output interfaces (not shown) for e.g. receiving data from sensor devices and output control signals. The memory device(s) 220 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 221-224. Each memory device 220 may store any suitable instructions, data or information, including a computer program, software, an application including one or more of logic, rules, code, tables, etc. and/or other instructions capable of being executed by e.g. control circuitry 210 and, utilized. Specifically, the memory device may comprise a first determining module 221, a second determining module 222, a providing module 223 and a compensating module 224. The memory device 220 may store any instructions and/or programs that may compensate total forward resistance according to the disclosure herein.

The instructions may be executed by the control circuitry 210. For example, the first determining module 221 may comprise instructions for determining an actual stator flux. Further, the second determining module 222 may comprise instructions/programs for determining a maximum actual phase voltage magnitude and the providing module 223 may comprise instructions for providing or receiving a compensation parameter. Further, the compensation module 224 may comprise instructions for compensating the total forward resistance based on the compensation parameter. Accordingly, the control circuitry 210 may utilize the different modules 221-223, in corresponding devices (such as the current controller 7, flux controller 2 or inverter 3) to compensate the total forward resistance. In some embodiments, the memory device 220 may be considered to be integrated in the control circuitry.

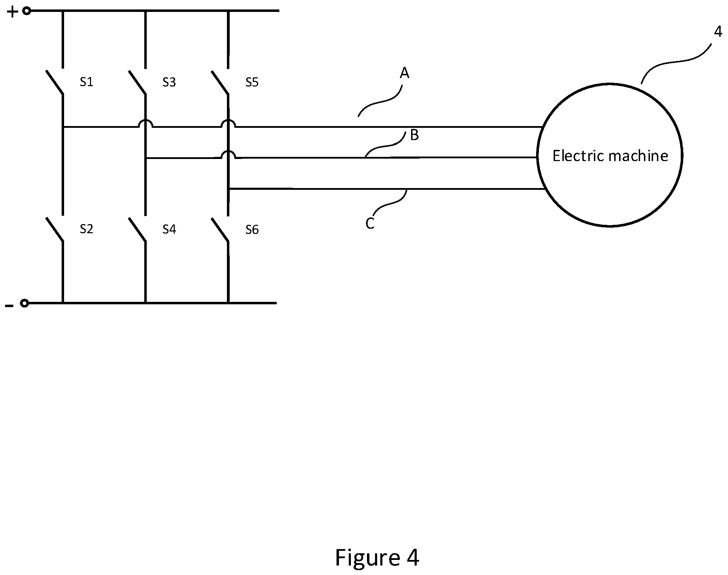

Figure 4 illustrates schematically an example of control of switches in the inverter 3 shown in Figure 1 and 2, in accordance with said final output $T_{on}$. Specifically, Figure 4 illustrates a circuitry comprising six switches s1-s6. The switches s1-s6 may be transistor switches. Accordingly, Figure 4 illustrates that the six switches s1-s6 are arranged in pairs, with each pair configured for controlling one corresponding phase A, B, C of the electric machine 4. Hence, the final output may be indicative of the time-period that at least one switch associated to each corresponding phase of the electric machine will be in a specific state (e.g. a time-period/duration in which one switch of each pair is to be closed so the transistor is conducting).

Thus, in Figure 4, the final output may be a time-period in which an upper/first switch s1, s3, s5 of each transistor pair is closed. The upper switches s1, s3, s5 may be considered to connect to the positive side of the dc link while the lower/second switches s2, s4, s6 may be considered to connect to the negative side of the DC link. An actual control of the switches may be performed by a gate driver of the inverter 3.

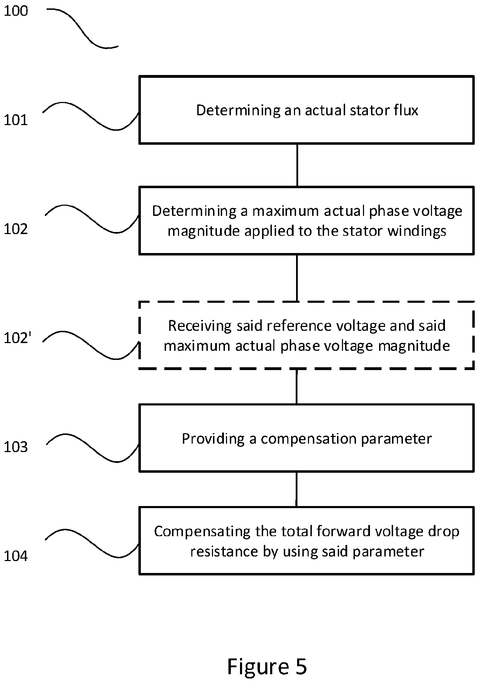

Figure 5 illustrates a method 100 for compensating the total forward resistance occurring across conducting components of an electric machine (e.g. components connecting an electric machine and an inverter), the method 100 comprising the steps of determining 101, in a flux controller, an actual stator flux. The actual stator flux being an amount of magnetic flux of a stator of said electric machine. Further, the method 100 comprises the step of determining 102 a maximum actual phase voltage magnitude applied on the stator windings based on the actual stator flux. Further, the method 100 comprises the step of providing a compensation parameter that satisfy a condition in which said maximum actual phase voltage magnitude is equal to a reference voltage. Furthermore, the method 100 comprises the step of compensating 104 the total forward resistance by using said compensation parameter.

It should be noted that the method steps 101-104 may be performed in any suitable order as appreciated by a skilled person in the art.

Figure 5 further illustrates that the method 100 may comprise the step of receiving 102' said reference voltage and said maximum actual phase voltage magnitude so that the step of providing 103 can be performed by using, or based on said received reference voltage and said maximum actual phase voltage magnitude.

The step of determining the actual stator flux 101 may comprise the following sub-steps (not shown in Figure 5):

- receiving, in said flux controller, the reference voltage and a voltage setpoint as input and
- providing the actual stator flux as output.

Further, the step of compensating 104 the total forward resistance may comprise (not shown in Figure 5) the following sub-steps:

- calculating, based on the compensation parameter, a time compensation parameter
- adding the time compensation parameter to a modulator output, forming a final output, wherein the total forward voltage is compensated based on said final output.

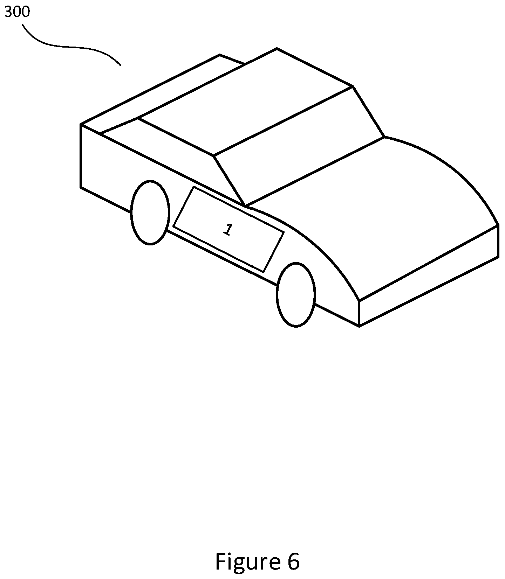

Figure 6 illustrates an objective view of a vehicle 300 comprising the electric drive system 1 according to any aspect herein. The vehicle may be an electric vehicle.

**Claims**

1. A method (100) for compensating a total forward resistance occurring across conducting components of an electric machine, the method comprising:

   - determining (101), in a flux controller, an actual stator flux, $\psi_{act}$, the actual stator flux being an amount of magnetic flux of a stator of said electric machine;
   - determining (102) a maximum actual phase voltage magnitude applied on the stator windings, $U_{act}$, based on the actual stator flux;
   - providing (103) a compensation parameter that satisfy a condition in which said maximum actual phase voltage magnitude, $U_{act}$, is equal to a reference voltage, $U_{ref}$;
   - compensating (104) the total forward resistance by using said compensation parameter.

2. The method (100) according to claim 1, wherein the step of determining the actual stator flux (101) comprises:

- receiving, in said flux controller, the reference voltage and a voltage setpoint as input; and
- providing the actual stator flux as output.

**3.** The method (100) according to claim 1 or 2, wherein the compensation parameter is a total forward resistance compensation parameter, $R_{fTotComp}$, wherein prior to, or during the step of providing (103), the method (100) comprises:

- receiving (102') said reference voltage and said maximum actual phase voltage magnitude, the maximum actual phase voltage magnitude being based on electric machine speed and said actual stator flux,

wherein the step of providing (103) is performed by using said received reference voltage and said maximum actual phase voltage magnitude.

**4.** The method (100) according to any one of the preceding claims, wherein the step of compensating (104) the total forward resistance comprises:

- calculating, based on the compensation parameter, a time compensation parameter, $t_{fTotComp}$.
- compensate a modulator output with the time compensation parameter, forming a final output, wherein the total forward voltage is compensated for said final output.

**5.** The method (100) according to claim 4, wherein the modulator output is outputted from a pulse width modulator unit, the pulse width modulator, PWM, using a voltage setpoint as a PWM input.

**6.** The method (100) according to claim 4 or 5, wherein the time compensation parameter, $t_{fTotComp}$, is determined based on the expression:

$$\frac{R_{fTotComp} \cdot I_{ph}}{U_{dc}} \cdot T_{sw}$$

wherein $T_{sw}$ is a switching period, $I_{ph}$ is a phase current through the components of a conducting power module and $R_{fTotComp}$ is said compensation parameter.

**7.** The method (100) according to any one of the claims 1-6, wherein the reference voltage, $U_{ref}$, is based on a dc link voltage.

**8.** The method (100) according to any one of the claims 1-7, wherein the method steps 101-103 are performed during a field-weakening operation of the electric machine.

**9.** The method (100) according to any one of the claims 1-8, wherein the step of providing (103) the compensation parameter is performed by calibrating the compensation parameter, $R_{fTotComp}$, until said maximum actual phase voltage magnitude, $U_{act}$, is equal to said reference voltage, $U_{ref}$.

**10.** The method (100) according to claim 9, wherein the calibration is performed manually.

**11.** The method (100) according to any one of the claims 1-10, wherein the step of providing (103) is performed in a controller by inputting each of the reference voltage and the maximum actual phase voltage magnitude in steady states, and to output, from the controller, a total forward resistance compensation parameter.

**12.** The method (100) of any one of the claims 1-11, wherein the compensation parameter is a fixed compensation parameter.

**13.** An electric drive system (1), the electric drive system (1) being configured to perform the method (100) according to any one of the claims 1-12.

**14.** A computer-readable storage medium storing one or more programs configured to be executed by one or more electronic control units (200) of an electric drive system (1), the one or more programs comprising instructions for performing the method (100) according to any one of the claims 1-12.

**15.** A vehicle (300) comprising the electric drive system (1) according to claim 13.

Figure 1

Figure 2

Control Circuitry

Memory Device

First determining module  221

Second determining module  222

Providing module  223

Compensating module  224

200

210

220

Figure 3

Figure 4

100

```
┌─────────────────────────────────────────┐
101   │        Determining an actual stator flux         │
      └─────────────────────────────────────────┘
                           │
      ┌─────────────────────────────────────────┐
      │    Determining a maximum actual phase voltage    │
102   │      magnitude applied to the stator windings      │
      └─────────────────────────────────────────┘
                           │
      ┌ ─ ─ ─ ─ ─ ─ ─ ─ ─ ─ ─ ─ ─ ─ ─ ─ ─ ─ ─ ─┐
      │       Receiving said reference voltage and said       │
102'  │     maximum actual phase voltage magnitude      │
      └ ─ ─ ─ ─ ─ ─ ─ ─ ─ ─ ─ ─ ─ ─ ─ ─ ─ ─ ─ ─┘
                           │
      ┌─────────────────────────────────────────┐
103   │          Providing a compensation parameter          │
      └─────────────────────────────────────────┘
                           │
      ┌─────────────────────────────────────────┐
      │    Compensating the total forward voltage drop     │
104   │       resistance by using said parameter        │
      └─────────────────────────────────────────┘
```

Figure 5

Figure 6

Europäisches
Patentamt
European
Patent Office
Office européen
des brevets

# EUROPEAN SEARCH REPORT

**Application Number**

EP 24 22 0765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHOA D HOANG ET AL: "Influence and Compensation of Inverter Voltage Drop in Direct Torque-Controlled Four-Switch Three-Phase PM Brushless AC Drives", IEEE TRANSACTIONS ON POWER ELECTRONICS, INSTITUTE OF ELECTRICAL AND ELECTRONICS ENGINEERS, USA, vol. 26, no. 8, 1 August 2011 (2011-08-01), pages 2343-2357, XP011371144, ISSN: 0885-8993, DOI: 10.1109/TPEL.2010.2096561 * the whole document * | 1-15 | INV. H02P21/14 H02P21/16 H02P23/14 |
| A | LIXIN TANG ET AL: "Low speed performance improvement of a direct torque controlled interior permanent magnet synchronous machine drive", 2004 IEEE APPLIED POWER ELECTRONICS CONFERENCE AND EXPOSITION, APEC 04, IEEE, ANAHEIM, CA, USA, vol. 1, 22 February 2004 (2004-02-22), pages 558-564, XP010705010, DOI: 10.1109/APEC.2004.1295862 ISBN: 978-0-7803-8269-5 * the whole document * | 1-15 | |
| A | JP 5 740194 B2 (TOSHIBA CORP) 24 June 2015 (2015-06-24) * the whole document * | 1-15 | TECHNICAL FIELDS SEARCHED (IPC) H02P |

The present search report has been drawn up for all claims

| Place of search | Date of completion of the search | Examiner |
|---|---|---|
| Munich | 6 May 2025 | Fraïssé, Stéphane |

EPO FORM 1503 03.82 (P04C01)

## ANNEX TO THE EUROPEAN SEARCH REPORT
## ON EUROPEAN PATENT APPLICATION NO.

EP 24 22 0765

This annex lists the patent family members relating to the patent documents cited in  the above-mentioned European search report.
The members are as contained in the European Patent Office EDP file on
The European Patent Office is in no way liable for these particulars which are merely given for the purpose of information.

06-05-2025

| Patent document cited in search report | | Publication date | Patent family member(s) | | Publication date |
|---|---|---|---|---|---|
| JP 5740194 | B2 | 24-06-2015 | JP | 5740194 B2 | 24-06-2015 |
| | | | JP | 2012223018 A | 12-11-2012 |

EPO FORM P0459

For more details about this annex : see Official Journal of the European Patent Office, No. 12/82